(19) Europäisches Patentamt
European Patent Office
Office européen des brevets

(11) **EP 1 916 544 A1**

(12) **EUROPÄISCHE PATENTANMELDUNG**
veröffentlicht nach Art. 153 Abs. 4 EPÜ

(43) Veröffentlichungstag:
**30.04.2008 Patentblatt 2008/18**

(21) Anmeldenummer: 06742499.4

(22) Anmeldetag: **26.05.2006**

(51) Int Cl.:
*G01V 3/06* (2006.01)    *G01V 3/15* (2006.01)

(86) Internationale Anmeldenummer:
**PCT/EA2006/000006**

(87) Internationale Veröffentlichungsnummer:
**WO 2007/003203 (11.01.2007 Gazette 2007/02)**

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.06.2005   RU 2005118534**

(71) Anmelder:
• **Lisitsyn, Evgenij Dmitrievich**
  **St.Petersburg, 192212 (RU)**
• **Tulupov, Andrej Vladimirovich**
  **Moscow 117036 (RU)**
• **Petrov, Alexandr Arkadevich**
  **St. Petersburg 197101 (RU)**
• **Kyasper, Vladimir Eduardovich**
  **St. Petersburg 192283 (RU)**

(72) Erfinder:
• **Lisitsyn, Evgenij Dmitrievich**
  **St.Petersburg, 192212 (RU)**
• **Tulupov, Andrej Vladimirovich**
  **Moscow 117036 (RU)**
• **Petrov, Alexandr Arkadevich**
  **St. Petersburg 197101 (RU)**
• **Kyasper, Vladimir Eduardovich**
  **St. Petersburg 192283 (RU)**

(74) Vertreter: **Jeck, Anton**
  **Jeck - Fleck - Hermann**
  **Klingengasse 2/1**
  **71657 Vaihingen/Enz (DE)**

(54) **VERFAHREN ZUR ELEKTRISCHEN MEERESERKUNDUNG NACH ÖL- UND GASFELDERN UND VORRICHTUNG ZUR DURCHFÜHRUNG DES VERFAHRENS**

(57)    Die Erfindung bezieht sich auf ein Verfahren zur elektrischen Meereserkundung nach Öl- und Gasfeldern. Es sieht die Anordnung von Bodenstationen im Erkundungsgebiet, die Anregung eines elektromagnetischen Feldes mit Hilfe eines Dipols im Bereich der Aufstellung der Bodenstationen, die Registrierung der Signale durch Empfängerelektroden der Bodenstationen, den Empfang der Informationen von den Bodenstationen über den elektrischen Widerstand der Meeresboden-Gesteine, die Modellierung des Profils dieser Gesteine und die Zusammenstellung der Prognose über das Vorhandensein von Kohlenstoff vor.

EP 1 916 544 A1

**Beschreibung**

Die Erfindung betrifft ein Verfahren zur elektrischen Meereserkundung nach Öl- und Gasfeldern, das die Anordnung von Bodenstationen im Erkundungsgebiet, die Anregung eines elektromagnetischen Feldes mit Hilfe eines Dipols im Bereich der Aufstellung der Bodenstationen, die Registrierung der Signale durch Empfängerelektroden der Bodenstationen, den Empfang von Informationen von den Bodenstationen über den elektrischen Widerstand der Meeresboden-Gesteine, die Modellierung des Profils dieser Gesteine und die Zusammenstellung der Prognose über das Vorhandensein von Kohlenstoff vorsieht, sowie ein Erkundungskomplex (Vorrichtung) zur Durchführung des Verfahrens.

Heutzutage werden unterschiedliche Verfahren zur Meereserkundung nach dem Vorkommen von Kohlenstoff eingesetzt. Diese Verfahren sind mit der Einwirkung von Impulsen eines elektromagnetischen Feldes, der Registrierung der nachfolgenden Veränderungen der elektromagnetischen Daten der Grundsteine und der Analyse der ermittelten Daten für das Auffinden vorhandener Anomalien und die Bestimmung ihrer Natur verbunden. Die Erkundung erfolgt mit Hilfe der unterschiedlichen Erkundungskomplexe (Patent RF 22 36 028, Patentanmeldung UdSSR 12 2998, Patentanmeldung UdSSR 1798666, Patentanmeldung UdSSR 434385, US-Patent 4,298,840 und US-Patent 4,617,518.

Bekannt ist ein Verfahren zur elektrischen Meereserkundung auf einer treibenden Eisscholle mit der Anwendung eines Erkundungskomplexes (Vorrichtung). Die Vorrichtung besteht aus den Treiber- und den Empfängergeräten, aus einer Quelle von periodischen Wechselstromimpulsen und einer Datenverarbeitungseinheit (RU 2069375). Das Verfahren besteht darin, dass die Treiber- und Empfängergeräte vertikal unter der Eisscholle im Wasser angeordnet werden. Die Impulsgabe erfolgt mit Hilfe der Quelle der Wechselstromimpulse in Höhe von einigen Dutzenden Amper mittels eines Gerätes ERS 72 oder eines anderen Gerätes. Die Datenverarbeitung erfolgt durch eine digitale elektrische Erkundungsstation des Typs TsES. Die Profilierung des Schnittes erfolgt auf einer bestimmten festen Entfernung zwischen den Stellen der Signalsendung und des Signalempfanges nach der Einwirkung durch den Wechselimpuls. Es darf nur die vertikale Komponente des Elektrofeldes gemessen werden.

Dieses Verfahren kann jedoch bei der Messung von einem bewegten Schiff aus nicht verwendet werden, da es auf dem Betrieb einer unbewegenden Wasserschicht in Bezug auf die Eisscholle basiert. Außerdem kann das Verfahren bei der Arbeit in einer Tiefe über 200 m nicht verwendet werden. Gemäß dem Verfahren können die Parameter der Polarisation in der Tiefe von über 200 m nicht gemessen werden, was gerade die Genauigkeit und die Zuverlässigkeit der Prognose erhöht.

Das Verfahren (Patentanmeldung UdSSR 150184), das vertikale Generatoren- und Empfängerlinien verwendet, die auf unterschiedlichen Schiffen angeordnet werden, ist mit dem oben beschriebenen Verfahren gleich. Dabei wird auch nur die vertikale Komponente des Elektrofeldes gemessen, wodurch allerdings die Zuverlässigkeit der Prognose vermindert wird. Außerdem wirkt sich jegliche vertikale Abweichung einer der Linien auf die Genauigkeit der Messung aus. Dies kommt praktisch bei einer realen Erkundung immer vor.

Bekannt sind auch Verfahren, die horizontale Generator- und Empfängerdipole verwenden (Patentanmeldung RF 2003129500, Patent RF 909646). Aufgrund der ermittelten Daten der Erkundungen ergibt sich ein Einheitswiderstand des Meeresboden-Gesteines und die Prognose übe das Vorhandensein des Vorkommens von Kohlenwasserstoff. Die genannten Verfahren sind für die Anwendung in einer Tiefe bis zu 150 m geeignet, ermöglichen es aber nicht, in Tiefwassern eingesetzt zu werden. Zudem mindert die Anwendung von einpolaren Generatorimpulsen für die Erkundung die Genauigkeit der Prognose und auch die Polarisationsparameter können nicht ermittelt werden.

Im Zusammenhang mit der Erkundung mit Hilfe von Schiffen gelten mehr universal und aussichtsreiche Verfahren, bei welchen über die Polarisation unter Einwirkung des elektromagnetischen Feldes der Daten des Einheitswiderstandes der Gesteine verwendet werden. Das sind Verfahren einer hervorgerufenen Polarisation, Verfahren der Entstehung des Feldes usw. (Patent RF 2236028, Patentanmeldung UdSSR 1122998, Patentanmeldung UdSSR 1798666, Patentanmeldung UdSSR 1434385, US-Patente 4,298,840 und 4,617,518).

Bei einer Erkundung nach dem Verfahren einer hervorgerufenen Polarisation (Patent RF 2094829) wird die Stärke des elektromagnetischen Feldes der hervorgerufenen Induktionspolarisation aufgenommen. Diese Stärke stellt eine Differenz zwischen der Stärke des vollen Feldes und der Stärke des Feldes dar, das durch die hervorgerufene Polarisation bedingt ist. Auf der Basis der Ergebnisse der Analyse der Veränderung dieses Parameters werden das Vorhandensein von geoelektrischen Inhomogenitäten und ihre Natur ermittelt.

Zu einem Erkundungskomplex für eine elektrische Meereserkundung gehört:

- ein Schiff = Träger der Geräte, welches mit einem Echolot ausgerüstet ist,
- geschleppter horizontaler Dipol mit Speiseelektroden und
- Empfängerelektroden.

Zu den Geräten auf dem Schiff gehören Einheiten zur Impulserzeugung, zur Registrierung und Analyse der ermittelten Daten sowie Hilfsgeräte, die sich für das Bringen des Schiffes zur Erkundungsstelle, zur Fixierung der Tiefe des Meeres usw. eignen (Patent RF 1819354).

Der Nachteil der bekannten Verfahren, die auf der Erforschung der hervorgerufenen Polarisation basieren, besteht darin, dass sie praktisch für die Erkundung der Schelfe in einer Tiefe von über 300 m nicht anwendbar sind, weil die Polarisationswirkung auf die Meeresboden-Gesteine bei der Anwendung der Technik aufgrund des Abschirmvermögens des Meereswassers verschwindet.

Nach dem technischen Sinn und Ergebnis ist die Vorrichtung für die Meereserkundung mit der Bezeichnung CSEM (L. MacGregor, M. Sinha/Geophysical Prospecting 2000, 48, Seiten 1091-1106; GB-Patent Nr. 2 402 745) dafür ausgelegt, die Erkundung bis in die Tiefe bis zu 3 km durchzuführen. Das Wesen dieses Verfahrens besteht darin, dass die elektromagnetischen Impulse, die harmonische Felder bilden, von einem horizontalen Dipol übertragen werden. Der Dipol ist im Wasser in eine Tiefe versenkt, die nach der Tiefe an dieser Stelle des Meeres ist. Die ermittelte Information wird von den Bodenstationen empfangen. Die Bodenstationen werden vorher auf dem Boden installiert. Die empfangenen Daten werden mit ähnlichen Daten verglichen, die von ähnlicher Stelle ohne Vorkommen von Kohlenstoffe empfangen wurden. Aufgrund dieses Vergleiches wird darüber Schluss gezogen, ob die Stelle perspektiv für ein Kohlenstoffvorkommen ist.

Um die genannten Daten zu erhalten, wird der horizontale Dipol mit dem Moment ca. $10^4$ Am in der Nähe der Bodenstation in eine Entfernung von ca. 50 m vom Meeresboden geschleppt. Der Dipol sendet ein ununterbrochenes Impulssignal des elektromagnetischen Feldes mit einer Frequenz von 0,25 bis 4 Hz aus. Da der elektrische Widerstand des Meerwassers niedriger ist als der des Meeresbodens, wird das Signal im Wasser schnell erlöschen. In Folge davon empfängt die Bodenstation nur die Signale, die mit dem Widerstand der Meeresboden-Gesteine verbunden sind und zwar bei der Messung in einem Abstand von über 500 m von der Strahlungsquelle. Die Empfänger der Bodenstation registrieren daher zwei orthogonale Komponenten des horizontalen elektrischen Feldes im Abstand von bis zu 15 km von der Quelle. Die Untersuchung der Änderungen in der Amplitude und Phase des empfangenen Signals ermöglicht es, die Information über den elektrischen Widerstand der Gesteine in der Tiefe von bis zu 5 bis 7 km zu erhalten.

Der dabei verwendete Erkundungskomplex (Vorrichtung) besteht aus einem Schiff, auf dem ein Generator angeordnet ist, und aus einem versenkten Apparat, der eine Einheit zur Erzeugung von Rechteckimpulsen hat. Der Generator ist durch ein Verbindungskabel mit dem Apparat verbunden, über das der Apparat gespeist wird. Der Apparat weist einen horizontalen elektrischen Dipol mit der Länge von ca. 100 m mit einem Dipolmoment von ca. $10^4$ Am auf und schließt Bodenstationen unterschiedlicher Typen ein (GB-Patent 2 402 745).

Die CSEM-Technologie weist die Nachteile auf, dass die Information über die Gesteine des Meeresbodens nur in beschränktem Umfang ermittelt werden können; es können keine Angaben über die Polarisationscharakteristiken der Gesteine ermittelt werden, wenn diese Technik angewandt wird. Die Generation wird in Form eines ununterbrochenen Impulssignals durchgeführt, was eine Messung zwischen den Impulsen ausschließt und dadurch die Genauigkeit der Prognose wesentlich verringert.

Außerdem ist es schwierig, bei der Anwendung des horizontalen Dipols den Abstand zwischen dem Dipol und dem Boden über die gesamte Länge des Dipols festzulegen, was die Berechnungen des Bodenprofils erschwert.

Keine der bekannten Technologien ermöglicht, die Meeresbodenerkundungen nach dem Verfahren der elektrischen Erkundung durchzuführen, mit dem der Einheitswiderstand der Ablagerungsgesteine sowie die Parameter der hervorgerufenen Polarisation gemessen werden können.

Es ist Aufgabe der Erfindung, ein Verfahren der elektrischen Meereserkundung und eine Vorrichtung zur Durchführung des Verfahrens zu schaffen, bei der bei der Erkundung in großen Tiefen nicht nur die Daten des Einheitswiderstandes der Ablagerungsgesteine sondern auch die Parameter der hervorgerufenen Polarisation gemessen werden können, um dadurch die Genauigkeit der Prognose zu erhöhen.

Diese Aufgabe der Erfindung wird bei einem Verfahren der eingangs erwähnten Art dadurch gelöst, dass die auf dem Dipol und den Bodenstationen angeordneten Uhren vor dem Versenken des Dipols in das Wasser abgeglichen werden, dass der vertikal ausgerichtete Dipol mit seinem oberen Ende in einer Tiefe von maximal 200 m und sein unteres Ende im Abstand von maximal 100 m (optimal von 1 bis 30 m) vom Meeresboden angeordnet werden, dass die Anregung des elektrischen Feldes durch periodische Wechselimpulse mit zeitlich fixierten Pausen zwischen den Impulsen zur Registrierung der horizontalen und vertikalen Komponenten des magnetischen Feldes vorgenommen wird, dass die Zerlegung der horizontalen und vertikalen Komponenten des magnetischen Feldes im Moment des Durchlasses des Stromes sowie beim Fehlen des Stromes fixiert wird, dass bei der Analyse der Signale nicht nur die Änderungen der primären, sondern auch der sekundären Felder berücksichtigt werden und dass die den Widerstand des Mediums charakterisierenden Daten und auch die Polarisationscharakteristiken ermittelt werden.

Dabei wird die Aufgabe mit der Anwendung der Technologie mit dem Namen "VeSoTEM" gelöst. Diese Technologie basiert auf dem durch die Erfinder festgestellten theoretischen Faktor, dass unter bestimmten Bedingungen bei der Anwendung eines vertikalen statt eines horizontalen Dipols zur Erzeugung der Wechselimpulse für das elektromagnetische Feld eine Entstehung der Polarisierung der Meeresboden-Gesteine erreicht werden kann und so eine zusätzliche Information empfangen werden kann.

Die Vorrichtung zur Durchführung des Verfahrens ist dadurch gekennzeichnet, dass der Dipol mit Speiseelektroden vertikal so angeordnet ist, dass sich das untere Ende des Dipols im Abstand von maximal 100 m vom Meeresboden befindet, wobei das Kabel, das für die Einspeisung der Elektroden des Dipols verwendet ist, als Fragment den Generator und die obere Speiseelektrode des Dipols verbindet und als koaxiales Kabel ausgebildet ist und dass für die Registrierung der Signale ein Satz von Bodenstationen verwendet ist.

Die Vorrichtung zur Erzeugung des anregenden Feldes besteht aus einem Schiffsgenerator, einem Kommutator, einem Stromabgreifer, einer Ballasteinrichtung und einer Strommesseinrichtung, wobei der Kommutator mit der Ballasteinrichtung über den Stromabgreifer mit dem Dipol und über die Einrichtung für die Strommessung mit der Registrierungs- und Datenverarbeitungseinheit verbunden ist.

Das Kabel für die Einspeisung der Elektroden des Dipols, das als Fragment den Generator mit der oberen Speiseelektrode des Dipols verbindet, ist als Koaxialkabel ausgebildet.

Zur Vorrichtung gehören Hilfseinrichtungen, insbesondere die Einheit des Selbstauftauchsystems der Bodenstationen; die Ballasteinrichtung, die für die Zerstreuung der Leistung des Generators zwischen den Impulsen sorgt und die Paare der unterschiedlich gerichteten Dipole mit gleichen Momenten darstellt, Geräte für die Ermittlung der Stelle des Schiffes, der Tiefe des Meeres usw. Als Bodenstationen werdne die elektrischen und elektromagnetischen Typenbodenstationen verwendet, die horizontale und vertikale Empfängerelektroden benutzen, um die horizontale und die vertikale Komponente des elektromagnetischen Feldes mit einer notwendigen Genauigkeit zu registrieren. Die Bodenstationen werden nach einem traditionellen Schema so angeordnet, dass mindestens drei Bodenstationen im Bereich des möglichen Vorkommens und ein Teil der Bodenstationen außerhalb dieses Bereiches des Vorkommens befinden. Die Anwendung mehrerer Bodenstationen ermöglicht es, die Antworten von unterschiedlichen Tiefen zu differenzieren und auf der Basis der mathematischen Modellierung die Anomalien des elektrischen Einheitswiderstandes und der Parameter der hervorgerufenen Polarisation zu ermitteln. Auf der Basis dieser Angaben und der Angaben der anderen geophysischen Verfahren (z. B. seismische Erkundung) kann einen Schluss über das Vorhandensein des Kohlenstoffes im Profil gezogen werden.

Die Erfindung wird anhand eines in den Zeichnungen dargestellten Ausführungsbeispiels näher erläutert. Es zeigen:

Fig. 1     im Blockschaltbild die Einheit zur Erzeugung des anregenden Magnetfeldes,

Fig. 2     in Gesamtansicht die Vorrichtung der Erfindung,

Fig. 3     die Ergebnisse der Berechnungen der elektrischen Felder, die durch die Bodenstationen bei der Anregung des Mediums des horizontalen Dipols registriert werden,

Fig. 4     die Ergebnisse der Berechnungen der elektrischen Felder, die durch die Bodenstationen bei der Anregung des Mediums des vertikalen Dipols registriert werden und

Fig. 5     die Veränderung der Signale, wenn sich die untere Elektrode des Dipols vom Meeresboden entfernt.

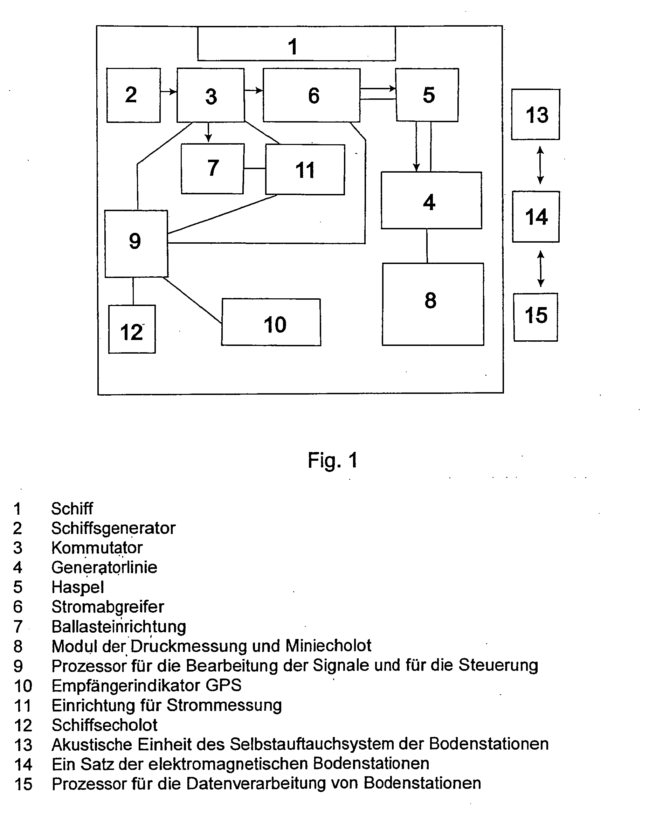

Im Blockschaltbild nach Fig. 1 sind folgende Bezeichnungen angenommen:

Schiff 1, auf dem die Einheit zur Erzeugung des anregenden Magnetfeldes angeordnet ist. Diese Einheit besteht aus dem Schiffsgenerator 2, dem Kommutator 3, der Generatorlinie 4, die auf dem Haspel 10 mit dem Stromabgreifer 6 angeordnet ist. Die Ballasteinrichtung 7, ein Modul zur Druckmessung und das Miniecholot 8, der Prozessor für die Bearbeitung der Signale und für die Steuerung 9, der Empfängerindikator GPS 10, die Einrichtung für die Strommessung 11 und letztendlich das Schiffsecholot 12 als weitere Elemente des Blockschaltbildes. Außerdem gehören zum Erkundungskomplex EK eine akustische Einheit des Selbstauftauchsystems der Bodenstationen 13, ein Satz der elektromagnetischen Bodenstationen 14 und ein Prozessor für die Datenverarbeitung von Bodenstationen 15. Der Generatordipol 19 weist eine obere Speiseelektronik 16 und eine untere Speiseelektrode 17 auf. Die Generatorlinie 4 besteht aus einem oberen Teil 18 mit zwei konzentrischen Leistungs-Wicklungen. Die Elektrode 16 ist an der oberen Wicklung und die Elektrode 17 an der unteren Wicklung angeschlossen. Die Bodenstationen 14 sind mit den horizontalen Empfängerelektroden 20 ausgestattet. Die Empfängerelektroden 20 sind auf den ausfahrbaren "Angeln" 21 angeordnet. Die Bodenstationen 14 weisen zudem Induktionsumwandler 22, für das Magnetfeld akustische Auslöser 23 und Gewichte 24 auf, um die Bodenstationen 14 während der Erkundung auf dem Boden zu halten.

Die beste Variante der Ausführung der Erfindung ist:

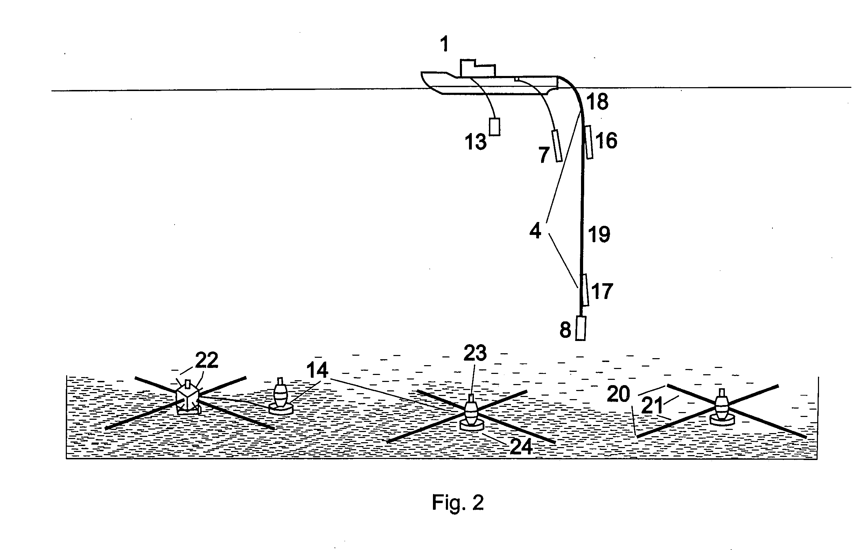

Die in den Zeichnungen dargestellte Vorrichtung EK besteht aus einem Schiff 1 mit einem Generator 2, zu dem ein Kommutator 3, ein Stromabgreifer 6 und eine Generatorlinie 4 in Reihe geschaltet ist. An die Generatorlinie 4 ist eine Ballasteinrichtung 7 zusammen mit einem Druckmessmodul und einem Miniecholot 8 angebracht. Der Vorrichtung ist ein Satz von Bodenstationen 14 zugeordnet. Die Generatorlinie 4 wird mit Hilfe einer Haspel 5 so im Wasser versenkt, dass die untere Speiseelektrode 17 sich in einem Abstand von 10 bis 30 m, aber maximal 100 m vom Meeresboden befindet, wie aus Fig. 2 zu entnehmen ist.

Der Erfindungskomplex (Vorrichtung) "VeSoTEM" funktioniert wie folgt:

Wenn das Schiff 1 zum Punkt des Profilanfanges kommt, werden die Uhren der Generatorlinie 4 und der Bodenstationen 14 mit Referenzsignalen (z. B. Signal PPS des GPS-Systems) synchronisiert, bevor die Bodenstationen 14 auf ihre Positionen auf den Meeresboden gesetzt werden. Die Bodenstationen 14 werden entlang dem Meeresboden an festgelegten Stellen so angeordnet, dass mindestens drei Stationen sich im Bereich des möglichen Vorkommens von Kohlenstoff und ein Teil der Bodenstationen außerhalb des Vorkommens befinden. Nach dem Aufstellen der Bodenstationen 14 kommt das Schiff 1 an die Stelle, die vom Beginn des Profils um die Tiefe des Meeres entfernt ist. Die Generatorlinie 4 wird dann vertikal so versenkt, dass sich die untere Speiseelektrode 17 im Abstand von maximal 100 m vom Meeresboden befindet. Dies wird vom Echolot 8 angezeigt. Dann wird die Einheit zur Erzeugung des Magnetfeldes eingeschaltet. Dabei werden zweipolige Impulse mit Pausen erzeugt, die eine Polarisationswirkung auf die Gesteine des Meeresbodens ausüben. Die Dauer der Impulse und Pausen beträgt 0,5 bis 16 Sekunden, abhängig von den Aufgaben der Geräte und den Besonderheiten der verwendeten Geräte. In den Pausen wird an den Schiffsgenerator 2 eine strahllose Ballasteinrichtung 7 angeschlossen, was die Schwankungen des Ballaststromes reduziert. Die Einrichtung für die Strommessung 11 misst den Strom im Dipol 19 mit der durch das Programm vorgegebenen Diskontinuität und dies während des Impulses und auch in den Pausen zwischen den Impulsen. Daher wird die Zeit des Anfanges und des Endes jedes Impulses festgehalten. Während der Erzeugung des anregenden Feldes wird das Schiff 1 im festgelegten Punkt nach den GPS-Signalen innerhalb von wenigstens 10 Minuten positioniert. Dabei registrieren die Bodenstationen 14 das Signal mit gleicher Diskontinuität wie die Einheit zur Erzeugung des Feldes und zwar während des Impulses und auch in den Pausen zwischen den Impulsen. Danach wird das Schiff 1 am nächsten festgelegten Punkt positioniert und der Prozess wiederholt sich. Nach dem Durchgang des ganzen Profils wird die Einheit zur Erzeugung des Feldes ausgeschaltet. Die Generatorlinie 4 wird auf das Schiff 1 genommen und an die Einheit 13 des Systems für das Selbstauftauchen der Bodenstationen 14 wird ein Signal zum Auftauchen gegeben. Nach dem Hieven der Bodenstationen 14 wird der Wert der wechselseitigen Abweichungen der Uhren von den Bodenstationen 14 und der Generatorlinie 4 gemessen. Die ermittelte Differenz wird gleichmäßig innerhalb der gesamten Messdauer verteilt. Die gemessenen Signale, die während der Impulse und Pausen gemessen wurden, werden von den Bodenstationen 14 in den Prozessor 15 für die weitere Verarbeitung und Interpretation kopiert.

Zwecks Einschätzung der Zukunftsaussichten des Verfahrens wurde eine mathematische Modellierung durchgeführt. Das Modell des Mediums, das ein Vorkommen von Kohlestoff im Meeresboden imitiert und das für theoretische Berechnungen verwendet wird, besteht aus fünf Schichten. Die Parameter jeder Schicht werden nach der Formel Cole-Cole wie folgt angegeben:

$$\rho_j^\omega = \rho_j^0 \left(1 - \eta_j\right) \bigg/ \left(1 - \eta_j \frac{1}{1 + \left(-i\omega\tau_j\right)^{c_j}}\right),$$

wobei $\rho^\omega$ den elektrischen Einheitswiderstand bei der Frequenz w bedeutet, sowie q

- Polarisierbarkeit, T - die Zeitkonstante und c - einen Exponent, sowie j - die Nummer der Schicht angeben.

Die Parameter sind in der nachstehenden Tabelle aufgeführt:

| Nummer der Schicht | Parameter | | | | |
|---|---|---|---|---|---|
| | $\rho$, Ohmm | $\eta$,% | T, S | C | h (Leistung, m) |
| 1 | 0.3 | 0 | - | - | 1000 |

(fortgesetzt)

| Nummer der Schicht | Parameter | | | | |
|---|---|---|---|---|---|
| | ρ, Ohmm | η,% | T, S | C | h (Leistung, m) |
| 2 | 1 | 0.5 | 0.1 | 0.5 | 100 |
| 3 | 1 | 5 | 1 | 0.5 | 1900 |
| 4 | 50 | 0 | - | - | 100 |
| 5 | 1 | 0.5 | 0.1 | 0.5 | 100 |

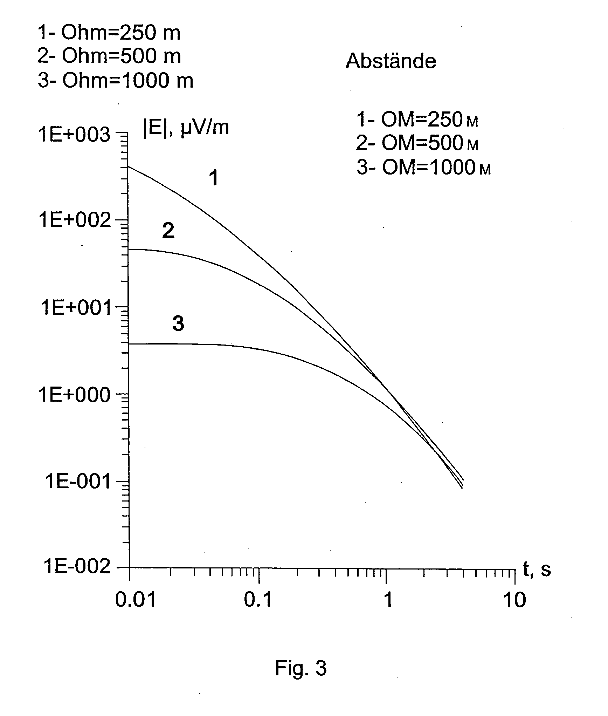

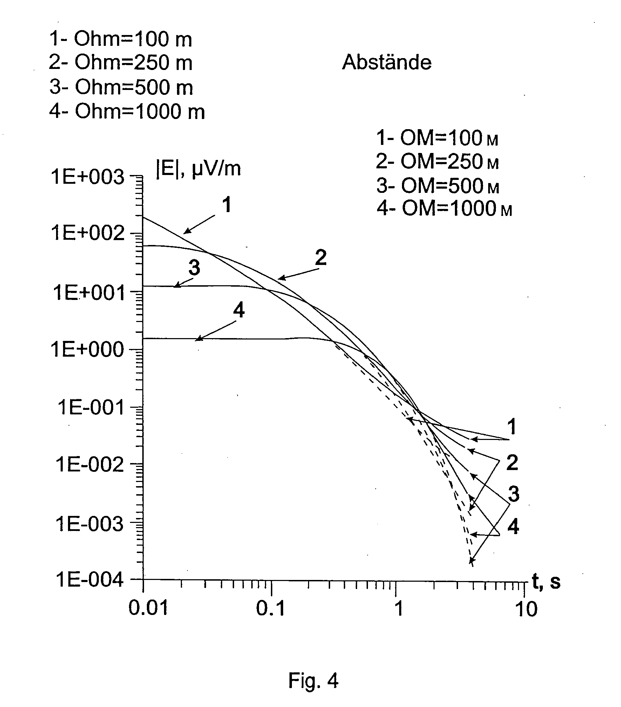

In Fig. 3 und 4 sind die Ergebnisse der Berechnungen der elektrischen Felder dargestellt, die durch die Bodenstationen 14 bei der Anregung des Mediums des horizontalen und des vertikalen Dipols registriert werden (Voll-Linien stellen die Figur mit Vorkommen und veränderte Gesteine dar, Punktlinien sind Hintergrund).

Wie aus den angegebenen Daten ersichtlich ist, fehlen die Unterschiede der Felder praktisch komplett, wenn Kohlenstoffe vorhanden oder nicht vorhanden sind, wenn unter Anwendung des horizontalen Dipols in dieser Tiefe die Unterschiede in der letzten Phase der Entstehung (t > 0,5) ziemlich groß sind und mittels der Bodenstationen 14 registriert werden können.

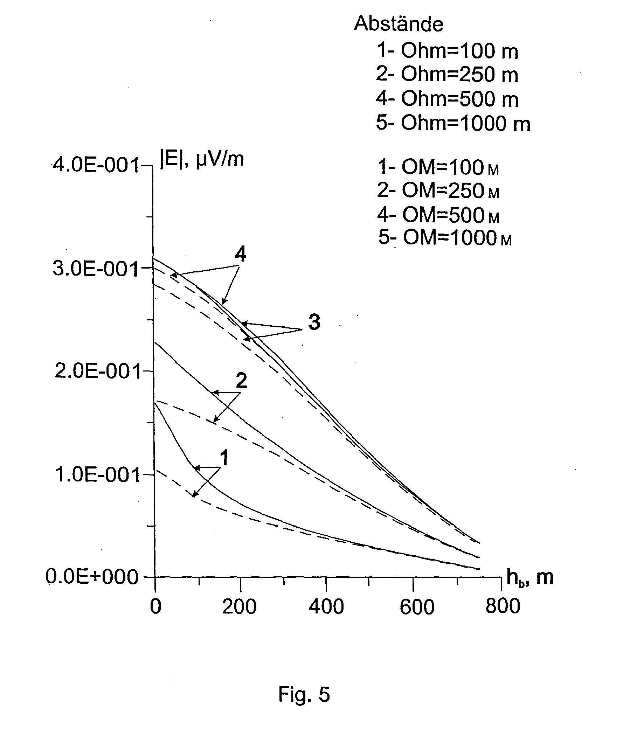

In Fig. 5 ist die Veränderung der Signale in dem Fall dargestellt, wenn die untere Elektrode 17 des Dipols 19 sich vom Meeresboden entfernt (t = 1 s). Aus der angeführten Graphik ist sichtbar, dass bei der Entfernung der unteren Elektrode vom Meeresboden die Signale sich sehr unterscheiden. Deshalb soll der Abstand maximal 100 m sein.

Mit den oben genannten Ergebnissen wird gezeigt, dass bei der Anwendung der erfindungsgemäßen Vorrichtung die Polarisationscharakteristiken der Gesteine erfasst werden können und eine Erkundung des Kohlenstoffvorkommens in Tiefwasserbereichen ermöglicht wird. Damit lässt sich eine Prognose besserer Qualität über das Vorhandensein von Kohlenstoff unterhalb des Meeresbodens abgeben. Die Anwendung der angemeldeten Technologie in Verbindung mit den Angaben des geophysischen Verfahrens erhöhen die Zuverlässigkeit der Ermittlung über das Vorhandensein von Kohlenstoff unter dem Meeresboden und den Erfolgsfaktor beim Erkundungsbohren.

## Patentansprüche

1.  Verfahren zur elektrischen Meereserkundung nach Öl- und Gasfeldern, das die Anordnung von Bodenstationen im Erkundungsgebiet, die Anregung eines elektromagnetischen Feldes mit Hilfe eines Dipols im Bereich der Aufstellung der Bodenstationen, die Registrierung der Signale durch Empfängerelektroden der Bodenstationen, den Empfang der Informationen von den Bodenstationen über den elektrischen Widerstand der Meeresboden-Gesteine, die Modellierung des Profils dieser Gesteine und die Zusammenstellung der Prognose über das Vorhandensein von Kohlenstoff vorsieht,
    **dadurch gekennzeichnet,**
    **dass** die auf dem Dipol (19) und den Bodenstationen (14) angeordneten Uhren vor dem Versenken des Dipols (19) in das Wasser abgeglichen werden,
    **dass** der vertikal ausgerichtete Dipol (19) mit seinem oberen Ende (16) in einer Tiefe von maximal 200 m und sein unteres Ende (17) im Abstand von maximal 100 m (optimal von 1 bis 30 m) vom Meeresboden angeordnet werden,
    **dass** die Anregung des elektrischen Feldes durch periodische Wechselimpulse mit zeitlich fixierten Pausen zwischen den Impulsen zur Registrierung der horizontalen und vertikalen Komponenten des magnetischen Feldes vorgenommen wird,
    **dass** die Zerlegung der horizontalen und vertikalen Komponenten des magnetischen Feldes im Moment des Durchlasses des Stromes sowie beim Fehlen des Stromes fixiert wird,
    **dass** bei der Analyse der Signale nicht nur die Änderungen der primären, sondern auch der sekundären Felder berücksichtigt werden und
    **dass** die den Widerstand des Mediums charakterisierenden Daten und auch die Polarisationscharakteristiken ermittelt werden.

2.  Vorrichtung zur elektrischen Meereserkundung nach Öl- und Gasfeldern, der aus einem Schiff mit einem Generator und einer Einheit zur Erzeugung eines anregenden magnetischen Feldes besteht, die über ein Kabel mit dem im Wasser versenkten Dipol mit Speiseelektroden, Registriereinheiten und einer Datenregistrierungs- und Datenverarbeitungseinheit auf dem Schiff und Hilfsgeräten verbunden ist,
    **dadurch gekennzeichnet,**

**dass** der Dipol (19) mit Speiseelektroden (16, 17) vertikal so angeordnet ist, dass sich das untere Ende des Dipols (19) im Abstand von maximal 100 m vom Meeresboden befindet, wobei das Kabel (4), das für die Einspeisung der Elektroden (16, 17) des Dipols (19) verwendet ist, als Fragment den Generator (4) und die obere Speiseelektrode (16) des Dipols (19) verbindet und als koaxiales Kabel ausgebildet ist und

**dass** für die Registrierung der Signale ein Satz von Bodenstationen (14) verwendet ist.

**3.** Vorrichtung nach Anspruch 2,
**dadurch gekennzeichnet,**
**dass** die Einheit zur Erzeugung des anregenden Feldes aus einem Schiffsgenerator (2), einem Kommutator (3), einem Stromabgreifer (6), einer Ballasteinrichtung (7) und einer Strommesseinrichtung (11) besteht.

**4.** Vorrichtung nach Anspruch 3,
**dadurch gekennzeichnet,**
**dass** der Kommutator (3) mit der Ballasteinrichtung (7) über den Stromabgreifer (6) mit dem Dipol (19) und über die Strommesseinrichtung (11) mit einer Registrier- und/oder Datenverarbeitungseinrichtung (15) verbunden ist.

**5.** Vorrichtung nach Anspruch 2,
**dadurch gekennzeichnet,**
**dass** das Kabel (4) für die Einspeisung der Elektroden (16, 17) des Dipols (19) das als Fragment den Generator (2) mit der oberen Speiseelektrode (16) des Dipols (19) verbindet, als Koaxialkabel ausgebildet ist.

**Geänderte Ansprüche nach Art. 19.1 PCT**

**1.** Verfahren zur elektrischen Meereserkundung nach Öl- und Gasfeldern, das die Anordnung von Bodenstationen im Erkundungsgebiet, die Anregung eines elektromagnetischen Feldes mit Hilfe eines Dipols im Bereich der Aufstellung der Bodenstationen, die Registrierung der Signale durch Empfängerelektroden der Bodenstationen, den Empfang der Informationen von den Bodenstationen über den elektrischen Widerstand der Meeresboden-Gesteine, die Modellierung des Profils dieser Gesteine und die Zusammenstellung der Prognose über das Vorhandensein von Kohlenstoff vorsieht,
**dadurch gekennzeichnet,**
**dass** die auf dem Dipol (19) und den Bodenstationen (14) angeordneten Uhren vor dem Versenken des Dipols (19) in das Wasser abgeglichen werden,
**dass** der vertikal ausgerichtete Dipol (19) mit seinem oberen Ende (16) in einer Tiefe von maximal 200 m und sein unteres Ende (17) im Abstand von maximal 100 m (optimal von 1 bis 30 m) vom Meeresboden angeordnet werden,
**dass** die Anregung des elektrischen Feldes durch periodische Wechselimpulse mit zeitlich fixierten Pausen zwischen den Impulsen zur Registrierung der horizontalen und vertikalen Komponenten des magnetischen Feldes vorgenommen wird,
**dass** die Zerlegung der horizontalen und vertikalen Komponenten des magnetischen Feldes im Moment des Durchlasses des Stromes sowie beim Fehlen des Stromes fixiert wird,
**dass** bei der Analyse der Signale nicht nur die Änderungen der primären, sondern auch der sekundären Felder berücksichtigt werden und
**dass** die den Widerstand des Mediums charakterisierenden Daten und auch die Polarisationscharakteristiken ermittelt werden.

**2.** Vorrichtung zur elektrischen Meereserkundung nach Öl- und Gasfeldern, der aus einem Schiff mit einem Generator und einer Einheit zur Erzeugung eines anregenden magnetischen Feldes besteht, die über ein Kabel mit dem im Wasser versenkten Dipol mit Speiseelektroden, Registriereinheiten und einer Datenregistrierungs- und Datenverarbeitungseinheit auf dem Schiff und Hilfsgeräten verbunden ist,
**dadurch gekennzeichnet,**
**dass** der Dipol (19) mit Speiseelektroden (16, 17) vertikal so angeordnet ist, dass sich das untere Ende des Dipols (19) im Abstand von maximal 100 m vom Meeresboden befindet, wobei das Kabel (4), das für die Einspeisung der Elektroden (16,17) des Dipols (19) verwendet ist, als Fragment den Generator (4) und die obere Speiseelektrode (16) des Dipols (19) verbindet und als koaxiales Kabel ausgebildet ist und
**dass** für die Registrierung der Signale ein Satz von Bodenstationen (14) verwendet ist.

Fig. 1

1 Schiff
2 Schiffsgenerator
3 Kommutator
4 Generatorlinie
5 Haspel
6 Stromabgreifer
7 Ballasteinrichtung
8 Modul der Druckmessung und Miniecholot
9 Prozessor für die Bearbeitung der Signale und für die Steuerung
10 Empfängerindikator GPS
11 Einrichtung für Strommessung
12 Schiffsecholot
13 Akustische Einheit des Selbstauftauchsystem der Bodenstationen
14 Ein Satz der elektromagnetischen Bodenstationen
15 Prozessor für die Datenverarbeitung von Bodenstationen

Fig. 2

EP 1 916 544 A1

1- Ohm=250 m
2- Ohm=500 m
3- Ohm=1000 m

Abstände

1- OM=250 м
2- OM=500 м
3- OM=1000 м

Fig. 3

1- Ohm=100 m
2- Ohm=250 m        Abstände
3- Ohm=500 m
4- Ohm=1000 m

1- OM=100 м
2- OM=250 м
3- OM=500 м
4- OM=1000 м

|E|, µV/m

Fig. 4

Fig. 5

## INTERNATIONAL SEARCH REPORT

| | |
|---|---|
| International application No. | |
| PCT/EA 2006/000006 | |

| A. CLASSIFICATION OF SUBJECT MATTER | |
|---|---|
| | *G01V 3/06  (2006.01)* |
| | *G01V 3/15  (2006.01)* |

According to International Patent Classification (IPC) or to both national classification and IPC

**B.    FIELDS SEARCHED**

Minimum documentation searched (classification system followed by classification symbols)

G01V 3/00, 3/02, 3/04, 3/06, 3/08, 3/12, 3/15, 3/165

Documentation searched other than minimum documentation to the extent that such documents are included in the fields searched

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X, P | RU 48645 U1 (LISITSYN E.D. et al.) 27.10.2005 | 2-4 |
| Y | GB 2390904 A (UNIVERSIITY OF SOUTHAMPTON) 21.01.2004 | 2-4 |
| Y | RU 2253881 C1 (LISITSYN E.D. et al.) 10.06.2005 | 2-4 |
| Y | SU 98229 A (PECHERNIKOV V.F. et al.) 31.03.1954 | 3-4 |
| Y | SU 909646 A (SEVEROMORSKOE NAUCHNO-PROIZVODSTVENNOE GEOLOGOGEOFIZICHESKOE OBEDINENIE "SEVMORGEO") 28.02.1982 | 3-4 |
| A | RU 2236028 C1 (RYKHLINSKII I.I. et al.) 10.09.2004 | 1-5 |
| A | RU 150184 A (NAZARENKO O.V.) 30.09.1962 | 1-5 |

| ☐ Further documents are listed in the continuation of Box C. | ☐ See patent family annex. |
|---|---|

| | |
|---|---|
| *    Special categories of cited documents: | "T"   later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"   document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"   document member of the same patent family |

| Date of the actual completion of the international search | Date of mailing of the international search report |
|---|---|
| 11 August 2006 (11.08.2006) | 24 August 2006 (24.08.2006) |

| Name and mailing address of the ISA/ | Authorized officer |
|---|---|
| | |
| Facsimile No. | Telephone No. |

Form PCT/ISA/210 (second sheet) (July 1998)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- SU 122998
- SU 1798666
- SU 434385
- US 4298840 A
- US 4617518 A
- RU 2069375
- SU 150184
- SU 1122998
- SU 1434385
- GB 2402745 A

**In der Beschreibung aufgeführte Nicht-Patentliteratur**

- **L. MACGREGOR ; M. SINHA.** *Geophysical Prospecting,* 2000, vol. 48, 1091-1106